(19) Europäisches Patentamt / European Patent Office / Office européen des brevets

(11) **EP 4 456 476 A1**

(12) **EUROPEAN PATENT APPLICATION**
published in accordance with Art. 153(4) EPC

(43) Date of publication:
**30.10.2024 Bulletin 2024/44**

(21) Application number: **22910266.0**

(22) Date of filing: **19.12.2022**

(51) International Patent Classification (IPC):
***H04L 9/08*** (2006.01)     ***H04L 9/32*** (2006.01)

(86) International application number:
**PCT/ES2022/070810**

(87) International publication number:
**WO 2023/118632 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 ES 202131209**

(71) Applicant: **Universitat Politècnica de València**
**46022 Valencia (ES)**

(72) Inventors:
- **LÓPEZ RODRÍGUEZ, Damián**
  **46022 Valencia (ES)**
- **LARRIBA FLOR, Antonio Manuel**
  **46022 Valencia (ES)**

(74) Representative: **Pons**
**Glorieta Rubén Darío 4**
**28010 Madrid (ES)**

(54) **METHOD FOR CONTROLLING ELECTRONIC VOTING**

(57)     The invention relates to a method and system for controlling electronic voting that makes use of identification authorities, parties and users and comprises the steps of the user generating a vote and a polynomial of degree d, wherein the generated vote corresponds to an independent term of the polynomial, calculating a set of k points of the polynomial, generating a vote commitment, sealing said commitment and sending an identification along with the sealed commitment to the identification authorities, who verify that the user is a registered voter and has not already voted and digitally certify the user's commitment, sending it back to the user, who reveals the commitment certificate and distributes the polynomial points among the parties along with the revealed commitment. Once the voting has finished, each party sends their own points to the rest of the parties to reconstruct the polynomial and obtain the vote.

EP 4 456 476 A1

**Description**

**OBJECT OF THE INVENTION**

The invention relates to the field of electronic voting and, more particularly, to the security of identification information, the confidentiality of the way someone voted and the accuracy of the result.

A first object of the invention is a method for controlling electronic voting that protects the identity of voters and prevents results from being manipulated by distributing the information among a set of participants or parties.

**BACKGROUND OF THE INVENTION**

There are numerous solutions in the field of systems for controlling voting. Traditionally, voting systems based on paper ballots that guarantee user security without encrypting the vote have been proposed. Alternatives have also been proposed in which the ballot is separated into pieces that contain the vote but do not reveal the user's identity. However, they are not electronic voting systems and they are incompatible with remote voting. Furthermore, they also have weaknesses against attacks with certain patterns on the ballots.

Homomorphic cryptography makes it possible to work with cryptograms, processing the information they contain without having to decrypt the same, then obtaining the result of the decryption, thus resulting in the same result that would have been obtained if working with plain text. Many voting systems use these properties to aggregate encrypted votes and decrypt the final result; however, encryption systems usually require long calculation times.

The non-patent literature document "Anonymous electronic voting protocol with traceability" describes an electronic voting protocol that provides traceability, confidentiality, anonymity and universal verification through the use of Shamir's secret sharing, homomorphic commitment, multi-party secure computation, "key escrow", and considering the existence of a reliable Authority with absolute access and the defined role of which is to audit the voting result based on a sample of the votes cast.

Anonymity is protected by using a subprotocol based on blind signature during the registration phase prior to the voting phase, to seal the relationship between vote and voter. In the registration phase, the voter obtains a new voting certificate that incorporates their identity in encrypted form. In the voting phase, the voter uses their new certificate, divides their vote into different parts and sends one of the parts along with their commitment to each vote counting entity. In the counting phase, the counting entities work together to retrieve the votes and publish the result.

In this case, numerous authorities are used (registration, certificates and keys), and the structure of the vote is also different. Although the ballot is divided into different parts using homomorphic commitments to guarantee its integrity, both identification and certification of the ballots involves an exchange of messages between the voter and the authorities, making the system more expensive. Furthermore, this solution is based on securely distributing a key among authorities. Finally, the existence of an administrator capable of tracing the vote back to the voter reduces the privacy of the voting system.

The non-patent literature document "E-voting scheme using secret sharing and K-anonymity" describes an electronic voting protocol based on Shamir's secret sharing, homomorphism and k-anonymity. The support system model includes: a reliable Central Authority (AC), Voting System (VS), Voters (V), Candidates C and a Results Publication Panel. Authorised voters cast their vote through the voting system, which generates a corresponding credential, divides the sealed voting intention into several fragments and sends them to the different candidates, for subsequent reconstruction in conjunction with the voting system.

This solution uses Shamir's secret sharing, where the voting system is responsible for creating a polynomial that is used to communicate credentials to voters. Voters are assigned a random identifier that cannot be linked to their identity, and they operate based on that identifier. However, the system does not specify the implementation and operation of said identification system.

In general, it is assumed that the voting system is honest and voters are required to interact with it, not being able to independently generate the voting parameters; therefore, there is no guarantee that their ballot is not known by any authority.

In the state of the art, no solution has been found that guarantees the anonymity of the vote before any authority and the accuracy of the count without the need to base the concealment of the vote on cryptography methods or leave a trace that relates votes to the voters.

**DESCRIPTION OF THE INVENTION**

The present invention relates to an electronic voting method that obtains a result with the certainty that no vote has been manipulated nor can be known by any subset of participants or authorities. Instead, it can only be known by the set of all the parties involved who are entrusted with counting the vote. To do this, it makes use of one or more identification authorities, a set of j participants or parties and a set of users.

Thus, the method of the invention does not require encrypting the votes to ensure the privacy and immutability thereof. At the same time, the security of the electronic voting system is not compromised, making it more accessible and reducing complexity by avoiding cryptographic algorithms which execution involves a high cost of time.

The method of the invention allows the user to generate a vote independently and divide it into a set of pieces of information so that no type of information is revealed, either about the way someone voted or about the user who created said pieces of information. Possession of all these pieces allows the original vote to be retrieved; however, no subset of these pieces makes it possible to obtain the way someone voted.

Thus, in the method of the invention, the parties agree (through a consensus or not) on a value d, greater than or equal to j-1, and, preferably, also on a value k, greater than d. Alternatively, the values d and k can be generated by the identification authorities.

A commitment generation algorithm and, preferably, also a redundancy function is then agreed upon by the parties or the identification authorities.

For this purpose, in particular, a polynomial of degree d, greater than or equal to j-1, is generated by the user, where the generated vote corresponds to the independent term of said polynomial. Next, to divide the vote into a set of pieces of information, the user calculates a set of values containing d+1 or more points of the generated polynomial, up to a maximum of k points if the value of k has been established, subsequently distributing the points among the parties involved.

Next, the user generates a commitment that uniquely identifies the set of pieces of the vote, represented by the points of the polynomial, without revealing its content, using the commitment generation algorithm previously agreed upon. This commitment can be modified by the user to include redundancy agreed upon, such as a hash function. The result is subsequently sealed by the user who sends it along with their identification to the identification authorities.

The identification authorities verify that the user is correctly registered to vote and digitally certifies the user's commitment. In this way, the identification authority knows the user's identity, but has no way of knowing the vote since the commitment has been previously sealed. At that point, the user's identification and the sealed commitment can then be published.

The sealing of the commitment must be carried out so that it can be undone later without affecting the certification. This is possible by using homomorphic cryptography.

The user then distributes the generated polynomial points, accompanied by the signed commitment, among all the parties involved in the election. In this way, the parties do not know the user's identification, but only receive a piece of information related to their voting ballot and a commitment certificate that acts as proof of its validity and that will allow the ballot to be reconstructed.

The parties can verify that the verification of the received commitments fulfils the established redundancy function, in the event that the user had generated it, discarding the vote if not.

Finally, when the voting period has ended, the parties stop accepting messages from users.

Then, collaboration begins among the different parties to gather the pieces of information with the same signed commitment. To do this, each party sends the points of the polynomial it has to the rest of the parties and each party reconstructs the polynomial using the points previously obtained. The vote corresponds to the independent term of the reconstructed polynomial and it is considered to obtain the result of the election.

Next, the parties verify whether the number of points included in the reconstruction of the vote meets the established criterion that the commitment generated by the user has been modified or, if the value of k has been established, that the number of points received does not exceed the maximum number of points established a priori (k), so that if any of said conditions are met, the vote is considered null.

Preferably, the votes obtained and the polynomial points generated are published along with the commitment associated with them so that everyone can verify the validity of the election.

Publication by the parties allows voters to verify that the votes cast have been considered in the sense in which they were cast.

The invention also relates to a system for controlling electronic voting that comprises a first set of one or more processing units acting as identification authorities, a second set of j processing units acting as parties and a third set of one or more processing units acting as users. The processing units are configured to carry out the steps of:

- agreement among the parties (collectively or not), or alternatively by the identification authorities, on a value d greater than or equal to the number of parties minus one (j-1), and, preferably, a value k greater than d, as well as a commitment generation algorithm and, preferably, also a redundancy function,
- generating a vote by each user,
- generating, by the user, a polynomial of degree d, where the generated vote corresponds to the independent term of the generated polynomial,
- calculating, by the user, a set of values containing d+1 or more points of the generated polynomial, preferably up to k points if the value of k has been established,
- generating, by the user, a commitment of the generated vote by the commitment generation algorithm previously agreed upon,
- if the redundancy function is agreed upon, modifying, by the users, the commitment to add the generated redundancy function;
- sealing the generated commitment by using homomorphic cryptography by the user,
- sending an identification, by the user, along with the sealed commitment to the identification authorities;
- verifying, by the identification authorities, that the user is a registered voter and has not already voted;
- digitally certifying, by the identification authorities, the user's commitment and sending the commitment certificate back to the user;
- revealing the commitment certificate by the user;
- distributing, by the user, the points of the generated polynomial among the parties along with the revealed commitment certificate;
- if the redundancy function has been agreed upon, verifying, by the parties, that the verification of the received commitments fulfils the established redundancy function, discarding the vote if not,
- sending, by each party, the points of the polynomial to the rest of the parties, once the voting has finished;
- reconstructing, by each party, the polynomial and obtaining the vote that corresponds to its independent term, through the points obtained; and
- verifying, by the parties, whether the number of points included in the reconstruction of the vote meets the established criterion that the commitment generated by the user has been modified or, if the value of k has been established, that the number of points received exceeds the maximum number of points established a priori (k), so that if any of said conditions are met, the vote is considered null.

The inclusion of limits on the number of points to be generated by the user to consider the vote as valid may imply that if k is very large, it opens the possibility for a subset of parties to reveal the way someone voted, although the certification of the validity must be carried out by the set of parties.

Finally, the invention also relates to a computer program adapted to perform the steps of the described method using the defined processing units, as well as a machine-readable storage device characterised in that it comprises said computer program.

## DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

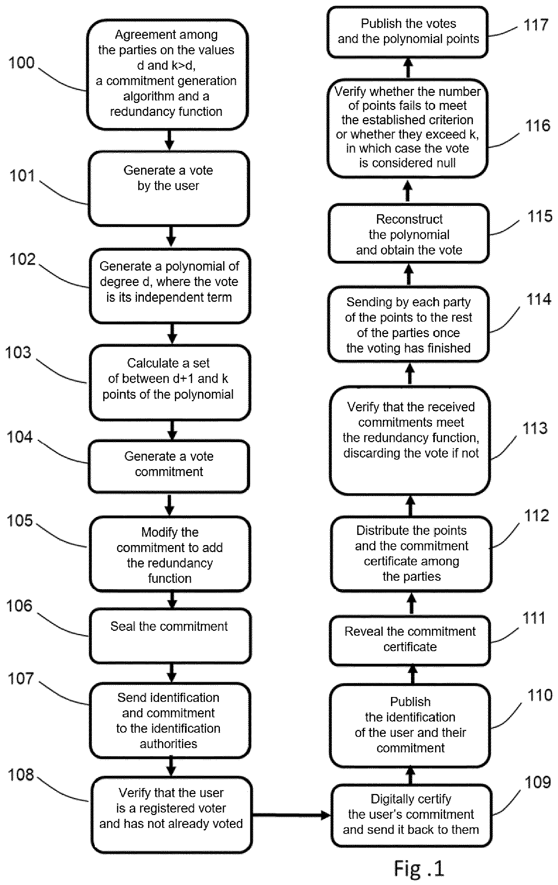

Figure 1 shows a block diagram that represents a preferred embodiment of an implementation of the method of the invention.

## PREFERRED EMBODIMENT OF THE INVENTION

The present invention relates to a method for controlling electronic voting that maintains anonymity and security against vote manipulation, through a verifiable and distributed-responsibility system.

Figure 1 shows a particular embodiment of the method of the invention that makes use of an identification authority, a set of parties that actively participate in the process, a public bulletin where information related to the election is published and a set of users or voters.

Firstly, a value d, greater than or equal to j-1, and a value k, greater than d, as well as a commitment generation algorithm and a redundancy function are agreed upon (100) among the parties or by the identification authorities.

In this case, the vote is generated (102) as a polynomial under modular arithmetic, so that the pieces of information into which the vote is divided are implemented by calculating (103) points of the polynomial that can be used, at the time of counting, to interpolate the original polynomial, knowing the way someone voted.

The user generates (101) their vote C and encodes it as the independent term of the polynomial, which is of degree d, modulo a prime number p.

$$q(x) = a_d x^d + a_{d-1} x^{d-1} + \ldots + a_1 x + C(mod\,p)$$

Next, the user calculates (103) a set of values containing between d+1 and k points:

$$\{(x_1, q(x_1)), (x_2, q(x_2)), \ldots, (x_{d+1}, q(x_{d+1}))\}$$

These points do not reveal any information about the vote or about the voter, but when all of them are aggregated together, the polynomial and therefore the vote can be retrieved.

Next, the user generates (104) a commitment of the set of points P that certifies it and prevents it from being changed later.

The user sends (107) their identification and the commitment, which identifies its set of points and is sealed (106) with a seal, to the identification authority. The user modifies (105) the commitment to add the generated redundancy function.

The identification authority verifies (108) that the user is registered to vote, has not previously voted, and returns (109) the digitally signed sealed commitment to the user. In this case, the information received by the identification authority, i.e., the user's identification and the sealed commitment, is also published (110) in the public bulletin.

The sealing and certification of the vote are implemented using cryptographic primitives with homomorphic properties; thus, the user can reveal (111) the commitment certificate and obtain a certification of their vote as valid without revealing anything about the way they voted and not allowing this certificate to be associated with their identity.

Next, the user distributes (112) the obtained points of the polynomial among the parties participating in the election, accompanying them with the signed commitment that guarantees the power to cast the vote, so that each and every one of the parties receives at least one point. The parties then verify (113) that the verification of the received commitments fulfils the established redundancy function, discarding the vote if not.

Once the election process is finished, the parties collaborate with each other by sending (114) the points to group the points associated with the same signed commitment. When the parties group the d+1 points associated with a commitment, they proceed to reconstruct (115) the polynomial independently, giving rise to decentralised counting, such that:

$$q(x) = \sum_{0 \le i \le j} y_i l_i(x)$$

where:

$$l_i(x) = \prod_{\substack{0 \le k \le j \\ k \ne i}} \frac{x - x_k}{x_i - x_k}$$

Once the polynomial has been interpolated, the vote C can be retrieved as:

$$C = q(0) mod p$$

Then, it is verified (116) whether the number of points included in the reconstruction of the vote meets the established criterion, or exceeds the maximum number of points established a priori, so that if any of said conditions are met, the vote is considered null.

The publication (117) of the vote C associated with the signed commitment and the set of points P in a public bulletin so that everyone can calculate the result of the election allows the process to be universally validated.

If j different options occur in an election, it is important to note that to guarantee the security of the system, the degree d of the polynomial to be used by each of the voters must be at least equal to or greater than j-1.

If the user generates more points than necessary, it could allow certain parties to reveal the way someone voted, since enough points could be distributed for a subgroup of parties to reveal the way someone voted; therefore, the number of points generated by the user is controlled by establishing the number of points generated between d+1 and k.

This implementation provides the possibility of voting in a secure and anonymous manner, since even in a post-quantum scenario, any attacker would need to obtain all the points related to a vote to know how someone voted.

## Claims

1. A method for controlling electronic voting that makes use of one or more identification authorities, a set of j parties and a set of users, and wherein the method comprises the steps of:

    - agreement (100) among the parties or by the identification authorities on a value d, greater than or equal to j-1, and a commitment generation algorithm,
    - generating (101) a vote by the user,
    - generating (102), by the user, a polynomial of degree d, where the generated vote corresponds to an independent term of the generated polynomial,
    - calculating (103), by the user, a set of values containing d+1 or more points of the generated polynomial,
    - generating (104), by the user, a commitment of the generated vote by the commitment generation algorithm previously agreed upon,
    - sealing (106) the generated commitment through the use of homomorphic cryptography by the user,
    - sending (107) an identification, by the user, along with the sealed commitment to the identification authorities;
    - verifying (108), by the identification authorities, that the user is a registered voter and has not already voted;
    - digitally certifying (109), by the identification authorities, the user's commitment and sending the commitment certificate back to the user;
    - revealing (111) the commitment certificate by the user;
    - distributing (112), by the user, the points of the generated polynomial among the parties along with the revealed commitment certificate;
    - sending (114), by each party, the points of the polynomial to the rest of the parties, once the voting has finished;
    - reconstructing (115), by each party, the polynomial and obtaining the vote that corresponds to its independent term, through the points obtained; and
    - verifying (116), by the parties, whether the number of points included in the reconstruction of the vote meets the established criterion that the commitment generated by the user has been modified, so that if any of said conditions are met, the vote is considered null.

2. The method according to claim 1, further comprising a step of publishing (117) the votes obtained and the polynomial points generated to allow universal validation.

3. The method according to claim 2, further comprising a step of publishing (110), by the identification authorities, the user's identification and the sealed commitment, once the user's commitment has been digitally certified (109) by the identification authorities and the commitment certificate has been sent back to said user.

4. The method according to claim 1, wherein the steps of sealing (106) and revealing (111) the generated commitment are carried out using cryptographic primitives with homomorphic properties.

5. The method according to claim 1, wherein the step of agreement (100) among the parties or by the identification authorities on a value d and a commitment generation algorithm also includes agreeing on a value k, greater than d, so that in the step of calculating (103), by the user, points of the polynomial, a maximum of k points is calculated, and in the step of verifying (116), by the parties, whether the number of points included in the reconstruction of the vote meets the established criterion, it is also verified whether the number of points received exceeds the maximum number of points established a priori (k), so that if any of said conditions are met, the vote is considered null.

6. The method according to claim 1, wherein the step of agreement (100) among the parties or by the identification authorities on a value d and a commitment generation algorithm further comprises agreeing on a redundancy function, so that after the user generates (104) a vote commitment, they modify (105) said commitment to add the redundancy function and, after the user distributes (112) the points of the generated polynomial among the parties, said parties verify (113) that the verification of the received commitments fulfils the established redundancy function, and they discard the vote if not.

7. A system for controlling electronic voting that comprises a first set of one or more processing units acting as identification authorities, a second set of j processing units acting as parties, and a third set of one or more processing units acting as users, configured to carry out the steps of:

   - agreement (100) among the parties or by the identification authorities on a value d, greater than or equal to j-1, and a commitment generation algorithm,
   - generating (101) a vote by the user,
   - generating (102), by the user, a polynomial of degree d, where the generated vote corresponds to the independent term of the generated polynomial,
   - calculating (103), by the user, a set of values containing d+1 or more points of the generated polynomial,
   - generating (104), by the user, a commitment of the generated vote by the commitment generation algorithm previously agreed upon,
   - sealing (106) the generated commitment through the use of homomorphic cryptography by the user,
   - sending (107) an identification, by the user, along with the sealed commitment to the identification authorities;
   - verifying (108), by the identification authorities, that the user is a registered voter and has not already voted;
   - digitally certifying (109), by the identification authorities, the user's commitment and sending the commitment certificate back to the user;
   - revealing (111) the commitment certificate by the user;
   - distributing (112), by the user, the points of the generated polynomial among the parties along with the revealed commitment certificate;
   - sending (114), by each party, the points of the polynomial to the rest of the parties, once the voting has finished;
   - reconstructing (115), by each party, the polynomial and obtaining the vote that corresponds to its independent term, through the points obtained; and
   - verifying (116), by the parties, whether the number of points included in the reconstruction of the vote meets the established criterion that the commitment generated by the user has been modified, so that if said condition is met, the vote is considered null.

8. A computer program **characterised in that** it is adapted to perform the steps of the method according to any of claims 1 to 6 using the processing units defined in claim 7.

9. A machine-readable storage device **characterised in that** it comprises the computer program according to claim 8.

100 — Agreement among the parties on the values d and k>d, a commitment generation algorithm and a redundancy function

101 — Generate a vote by the user

102 — Generate a polynomial of degree d, where the vote is its independent term

103 — Calculate a set of between d+1 and k points of the polynomial

104 — Generate a vote commitment

105 — Modify the commitment to add the redundancy function

106 — Seal the commitment

107 — Send identification and commitment to the identification authorities

108 — Verify that the user is a registered voter and has not already voted

109 — Digitally certify the user's commitment and send it back to them

110 — Publish the identification of the user and their commitment

111 — Reveal the commitment certificate

112 — Distribute the points and the commitment certificate among the parties

113 — Verify that the received commitments meet the redundancy function, discarding the vote if not

114 — Sending by each party of the points to the rest of the parties once the voting has finished

115 — Reconstruct the polynomial and obtain the vote

116 — Verify whether the number of points fails to meet the established criterion or whether they exceed k, in which case the vote is considered null

117 — Publish the votes and the polynomial points

Fig .1

7

<table>
<tr><td colspan="2" align="center">**INTERNATIONAL SEARCH REPORT**</td><td>International application No.<br><br>PCT/ES2022/070810</td></tr>
</table>

**A. CLASSIFICATION OF SUBJECT MATTER**

*H04L9/08* (2006.01)
*H04L9/32* (2006.01)
According to International Patent Classification (IPC) or to both national classification and IPC

**B. FIELDS SEARCHED**

Minimum documentation searched (classification system followed by classification symbols)
H04L

Documentation searched other than minimum documentation to the extent that such documents are included in the fields searched

Electronic data base consulted during the international search (name of data base and, where practicable, search terms used)

EPODOC, INVENES, WPI, NPL, XPIEE, XPI3E

**C. DOCUMENTS CONSIDERED TO BE RELEVANT**

| Category* | Citation of document, with indication, where appropriate, of the relevant passages | Relevant to claim No. |
|---|---|---|
| X | BOYEN XAVIER et al.. Epoque: "Practical End-to-End Verifiable Post-Quantum-Secure E-Voting". 2021 Ieee European Symposium On Security And Privacy (EuroS&P), 20210906 Ieee., 06/09/2021, pages 272 - 291, <DOI: 10.1109/EuroSP51992.2021.00027><br>Secciones 2 and 3. Table 1 | 1-9 |
| A | BINU, V. P.; NAIR, DIVYA G.; SREEKUMAR. "Secret sharing homomorphism and secure E-voting". Arxiv Preprint Arxiv:1602.05372, 17/02/2016 Retrieved of <URL: https://arxiv.org/abs/1602.05372> the whole document | 1-9 |
| A | CN 113037462 A (UNIV SOUTH CHINA TECH) 25/06/2021, the whole document | 1-9 |

☒ Further documents are listed in the continuation of Box C.          ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search<br>04/04/2023 | Date of mailing of the international search report<br>**(04/04/2023)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. Muñoz Sanchez<br><br><br>Telephone No. 91 3495349 |

Form PCT/ISA/210 (second sheet) (July 2022)

## INTERNATIONAL SEARCH REPORT

<table>
<tr><td colspan="2">International application No.<br>PCT/ES2022/070810</td></tr>
</table>

C (continuation).                    DOCUMENTS CONSIDERED TO BE RELEVANT

| Category * | Citation of documents, with indication, where appropriate, of the relevant passages | Relevant to claim No. |
|---|---|---|
| A | LI HUIAN et al. "A taxonomy and comparison of remote voting schemes". 2014 23rd International Conference On Computer Communication And Networks (icccn), 20140804 Ieee., 04/08/2014, pages 1 - 8, <DOI: 10.1109/ICCCN.2014.6911807><br>the whole document | 1-9 |

Form PCT/ISA/210 (continuation of second sheet) (July 2022)

## INTERNATIONAL SEARCH REPORT

Information on patent family members

International application No.

PCT/ES2022/070810

| Patent document cited in the search report | Publication date | Patent family member(s) | Publication date |
|---|---|---|---|
| CN113037462 A | 25.06.2021 | CN113037462B B | 20.09.2022 |

Form PCT/ISA/210 (patent family annex) (July 2022)